# EUROPÄISCHE PATENTANMELDUNG

(11) **EP 4 191 831 A1**
(43) Veröffentlichungstag der Anmeldung: **07.06.2023**
(21) Anmeldenummer: 21211607.3
(22) Anmeldetag: 01.12.2021
(51) Int. Cl.: H02K 1/14, H02K 3/18, H02K 7/14, H01M 10/6235, H01M 10/643, H01M 10/651, H01M 10/04

(54) **ELEKTROMOTOR, WERKZEUGMASCHINE UND SYSTEM, DAS EINE WERKZEUGMASCHINE UND EINE ENERGIEVERSORGUNGSVORRICHTUNG UMFASST**

(71) Anmelder: Hilti Aktiengesellschaft, 9494 Schaan (LI)
(72) Erfinder: Hartmann, Markus, 87665 Mauerstetten (DE); Asmus, Torsten, 87600 Kaufbeuren (DE); Schwarz, Stefan, 86899 Landsberg (DE); Stanger, Robert, 87600 Kaufbeuren (DE); Pallmer, Pierre, 86859 Igling (DE); Steentjes, Simon, 86807 Buchloe (DE); Herold, Stefan, 80538 München (DE); Ruff, Christian, 86391 Stadtbergen (DE)
(74) Vertreter: Hilti Aktiengesellschaft Corporate Intellectual Property

(57) **Zusammenfassung**

Die vorliegende Erfindung betrifft einen Elektromotor, insbesondere für eine Werkzeugmaschine, wobei der Elektromotor einen Stator mit einer Innenöffnung zur Aufnahme eines Rotors aufweist. Die Innenöffnung weist einen Durchmesser auf, der einem Stator-Innendurchmesser entspricht, wobei der Stator eine Reihe von Polzähnen aufweist, die jeweils von einer Wicklung zur Bildung einer Spule umwickelt sind. Die Wicklung wird von einem Referenz-Durchmesser charakterisiert, wobei ein Verhältnis des Referenz-Durchmessers zu dem Stator-Innendurchmesser multipliziert mit einer Anzahl der Polzähne größer als 0,3 ist. In einem zweiten Aspekt betrifft die Erfindung einen Elektromotor, insbesondere für eine Werkzeugmaschine, wobei ein Verhältnis gebildet wird aus einer Summe von Windungsleitergesamtquerschnitten und einem freien Wickelquerschnitt, wobei das Verhältnis mit einer Anzahl der Polzähne multipliziert wird und das Produkt größer ist als 2,2. In weiteren Aspekten betrifft die Erfindung eine Werkzeugmaschine mit einem der vorgeschlagenen Elektromotoren, sowie ein System, das eine Werkzeugmaschine und eine Energieversorgungsvorrichtung umfasst.

## Beschreibung

Die vorliegende Erfindung betrifft einen Elektromotor, insbesondere für eine Werkzeugmaschine, wobei der Elektromotor einen Stator mit einer Innenöffnung zur Aufnahme eines Rotors aufweist. Die Innenöffnung weist einen Durchmesser auf, der einem Stator-Innendurchmesser entspricht, wobei der Stator eine Reihe von Polzähnen aufweist, die jeweils von einer Wicklung zur Bildung einer Spule umwickelt sind. Die Wicklung wird von einem Referenz-Durchmesser charakterisiert, wobei ein Verhältnis des Referenz-Durchmessers zu dem Stator-Innendurchmesser multipliziert mit einer Anzahl der Polzähne größer als 0,3 ist. In einem zweiten Aspekt betrifft die Erfindung einen Elektromotor, insbesondere für eine Werkzeugmaschine, wobei ein Verhältnis gebildet wird aus einer Summe von Windungsleitergesamtquerschnitten und einem freien Wickelquerschnitt, wobei das Verhältnis mit einer Anzahl der Polzähne multipliziert wird und das Produkt größer ist als 2,2. In weiteren Aspekten betrifft die Erfindung eine Werkzeugmaschine mit einem der vorgeschlagenen Elektromotoren, sowie ein System, das eine Werkzeugmaschine und eine Energieversorgungsvorrichtung umfasst.

### Hintergrund der Erfindung:

Die Erfindung ist auf dem technischen Gebiet der kabellosen Werkzeugmaschinen angesiedelt, Kabellose Werkzeugmaschinen können zur Energieversorgung mit einer Energieversorgungsvorrichtung verbunden werden. Die Energieversorgungsvorrichtung kann beispielsweise als Ackumulator ("Akku") ausgebildet sein oder einen solchen umfassen. Akkumulatoren weisen üblicherweise eine Vielzahl an Energiespeicherzellen auf, auch Akku-Zellen genannt, mit deren Hilfe elektrische Energie aufgenommen, gespeichert und wieder abgegeben werden kann. Wenn der Akkumulator mit einer Werkzeugmaschine verbunden ist, kann die in den Energiespeicherzellen gespeicherte elektrische Energie an einen Verbraucher innerhalb der Werkzeugmaschine zugeführt werden. Zum Aufladen, d.h. Befüllen der Energiespeicherzellen mit elektrischer Energie, wird der Akkumulator mit einer Ladevorrichtung, wie einem Ladegerät, verbunden, sodass elektrische Energie zu den Energiespeicherzellen gelangen kann. Der Verbraucher kann beispielsweise ein Elektromotor der Werkzeugmaschine sein.

Ein Elektromotor ist dazu eingerichtet, elektrische Leistung in mechanische Leistung umzuwandeln. Dabei erzeugen Elektromotoren zumeist rotierende Bewegungen, wobei die entsprechende Drehbewegung auf den Anziehungs- und Abstoßungskräften von Magnetfeldern beruht, die im Bereich des Elektromotors erzeugt werden. In Stand der Technik sind insbesondere solche Elektromotoren bekannt, bei denen sich ein beweglich gelagertes Innenteil - der Rotor - in einem ortsfesten Außenteil - dem Stator - drehen kann. Der Stator weist vorzugsweise eine Innenbohrung auf, in der sich der Rotor drehen kann. Die Statoren von konventionellen Elektromotoren weisen Polzähne und Nuten auf, wobei die Polzähne mit einem Metalldraht umwickelt werden können, um eine elektromagnetisch wirksame Spule herzustellen.

Der Metalldraht, aus dem die Spulen gewickelt werden, kann innerhalb der Nuten verlaufen und um die Polzähne herumgewickelt vorliegen. Die Nuten können einen Schlitz aufweisen, durch den der Draht beim Wickelprozess in die Nut eingeführt werden kann. Konventionelle Elektromotoren werden aktuell aus fertigungstechnischen Gründen mit relativ geringen effektiven Einzel-Windungsleitergesamtquerschnitten gewickelt. Dieser Umstand ist darauf zurückzuführen, dass der Draht beim Wickeln durch die Schlitze geführt werden muss, so dass die Schlitze beispielsweise mindestens eine doppelte oder eine dreifache Breite des Drahtdurchmessers aufweisen müssen. Der verwendete Draht weist üblicherweise einen vergleichsweise geringen Querschnitt, d.h. eine vergleichsweise kleine Schnittfläche, auf. Beim Wickeln von bekannten Elektromotoren kann auf diese Weise der in den Nuten für das Wickelmaterial zur Verfügung stehende Raum nicht optimal genutzt werden. Das bedeutet, dass bei Betrachtung der genannten Schnittdarstellung ein vergleichsweise großer Anteil der insgesamt zur Verfügung stehenden Wicklungsfläche ("Gesamtwicklungsfläche") nachteiligerweise ungenutzt bleibt. Dieser ungenutzte Anteil der Gesamtwicklungsfläche wird im Sinne der Erfindung als "Statorleerfläche" bezeichnet. Es handelt sich dabei bevorzugt um diejenige Fläche bzw. denjenigen Anteil der Gesamtwicklungsfläche, der keinen elektromagnetischen Beitrag zum Antrieb des Elektromotors leistet.

Konventionelle Elektromotoren, wie sie aus dem Stand der Technik bekannt sind, weisen mehrere Nachteile auf. Zum einen führen die geringen Querschnitte des Metalldrahts, der zum Wickeln der Spulen eines Elektromotors verwendet wird, zu einer hohen Verlustleistung innerhalb des Motors. Dies gilt insbesondere dann, wenn der Elektromotor in einer kabellosen, akkubetriebenen Werkzeugmaschine verwendet wird, um die Werkzeugmaschine oder ihr Werkzeug anzutreiben. Besonders hohe Verluste treten insbesondere dann auf, wenn die Werkzeugmaschine mit einer Energieversorgungsvorrichtung mit elektrischer Energie versorgt wird und dabei hohe Abgabeströme fließen. Aufgrund der hohen Verlustleistungen kann sich einerseits der Wirkungsgrad des elektrischen Antriebs des Elektromotors verschlechtern, was sowohl unter ökologischen, als auch unter wirtschaftlichen Aspekten unerwünscht ist. Andererseits kann es zu einer unerwünschten Erwärmung der Leiter bzw. des Metalldrahts kommen, wobei erforderlichenfalls Maßnahmen vorzusehen sind, um die entsprechende Wärme aus dem Elektromotor abzuführen.

Ein ungünstiges, d.h. großes Verhältnis zwischen Statorleerfläche und Gesamtwicklungsfläche kann sich auch nachteilig auf die Kühlung des Elektromotors auswirken. Insbesondere kann es zu einer ungenügenden Wärmeabfuhr kommen. Beispielsweise kann bei einer Durchzugsbelüftung des Elektromotors die Kühleffizienz vermindert sein. Der verminderten Kühleffizienz kann ggf. durch die Bereitstellung eines größeren Volumenstroms an Kühlluft begegnet werden. Allerdings ist dafür ein größerer Bauraum und eine höhere Kühlleistung erforderlich. Darüber hinaus kann es zu einer vermehrten Geräuschemission kommen.

Wenn zur Kühlung des Elektromotors eine Außenbelüftung verwendet wird, kann es zu einer schlechteren Wärmeübertragung der Spulen zum Außenbereich des Elektromotors kommen, da die umgebende Luft bzw. das umgebende Gas oder Gasgemisch üblicherweise ein schlechter thermischer Leiter ist.

Die Aufgabe, die der vorliegenden Erfindung zugrunde liegt, besteht darin, die vorstehend beschriebenen Mängel und Nachteile des Standes der Technik zu überwinden und einen Elektromotor, insbesondere für eine Werkzeugmaschine, anzugeben, mit dem sowohl die Wärmeabfuhreffizienz, als auch die Leistungseffizienz verbessert wird. Insbesondere soll der bereitzustellende Elektromotor gut gekühlt werden können und dabei die Werkzeugmaschine ohne unnötige Verluste effizient antreiben. Ein weiteres Anliegen der Erfindung besteht darin, einen besonders kompakten und bauraumsparenden Elektromotor anzugeben, damit auch eine damit ausgestattete Werkzeugmaschine handlich und kompakt ausgebildet werden kann. Ein weiteres Anliegen der Erfindung besteht darin, ein System anzugeben, wobei das System eine Werkzeugmaschine und eine Energieversorgungsvorrichtung umfasst.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein Elektromotor, insbesondere für eine Werkzeugmaschine, vorgesehen, wobei der Elektromotor einen Stator mit einer Innenöffnung zur Aufnahme eines Rotors aufweist. Die Innenöffnung weist einen Durchmesser auf, der einem Stator-Innendurchmesser entspricht, wobei der Stator eine Reihe von Polzähnen aufweist, die jeweils von einer Wicklung zur Bildung einer Spule umwickelt sind. Die Wicklung wird von einem Referenz-Durchmesser charakterisiert, wobei ein Verhältnis des Referenz-Durchmessers der Wicklung zu dem Stator-Innendurchmesser multipliziert mit einer Anzahl der Polzähne größer als 0,3 ist. Das genannte Verhältnis des Referenz-Durchmessers zu dem Stator-Innendurchmesser multipliziert mit einer Anzahl der Polzähne größer als 0,3 hat sich insbesondere dann als vorteilhaft erwiesen, wenn der Elektromotor in einer akkubetriebenen Werkzeugmaschine eingesetzt wird, wobei eine Energieversorgungsvorrichtung der Werkzeugmaschine dazu eingerichtet ist, große Konstant-Ströme, beispielsweise in einem Bereich von mehr als 50 Ampère (A), bevorzugt mehr als 70 A und am meisten bevorzugt von mehr als 100 A abzugeben. Überraschenderweise kann der vorgeschlagene Elektromotor vor allem in solchen Einsatzfällen besonders gut und effizient gekühlt werden. Insbesondere weist der vorgeschlagene Elektromotor eine hohe Antriebs- und Wärmeabfuhreffizienz bei gleichzeitig hoher Leistungsdichte auf.

Außerdem haben Tests gezeigt, dass Elektromotoren mit einem erfindungsgemäßen Verhältnis von (Referenz-Durchmesser/Stator-Innendurchmesser-Anzahl der Polzähne) von größer als 0,3 einen besonders hohen Wirkungsgrad aufweisen, weil etwaige Leerräume innerhalb des Stators des Elektromotors besonders gut mit elektromagnetisch wirksamem Material gefüllt sind bzw. einen hohen Füllgrad aufweisen. Dadurch kann der vorgeschlagene Elektromotor sowohl unter ökologischen, als auch unter ökonomischen Gesichtspunkten optimal und besonders effizient betrieben werden. Insbesondere weist der vorgeschlagene Elektromotor einen hohen Nutfüllgrad auf, denn die Nuten des Stators können bei dem vorgeschlagenen Elektromotor besonders effektiv mit Leitermaterial der Wicklung ausgefüllt werden. Es ist im Sinne der Erfindung bevorzugt, dass eine Statorleerfläche anstelle von Luft durch die Erfindung vorteihafterweise mit elektromagnetisch wirksamem Material, wie dem Metalldraht der Wicklung oder einer größeren Blechpaketfläche, ausgefüllt werden kann. Dadurch kann vorteilhafterweise ein Elektromotor mit einem hohen Wirkungsgrad bereitgestellt werden.

Es ist erfindungsgemäß vorgesehen, dass die Wicklung von einem Referenz-Durchmesser charakterisiert wird. Es ist im Sinne der Erfindung insbesondere bevorzugt, dass die Wicklung von einer Anzahl der Windungen und die Windungen von einem Referenz-Durchmesser charakterisiert werden. Da die Wicklung vorzugsweise von einer Anzahl von Windungen gebildet wird, wird dadurch die Wicklung bzw. die entstehende Spule von einem Referenz-Durchmesser charakterisiert.

Es ist im Sinne der Erfindung bevorzugt, dass die Wicklung mindestens einen Einzel-Leiter aufweist. Das bedeutet im Sinne der Erfindung bevorzugt, dass mindestens ein einzelner Metalldraht verwendet wird, um die Spule durch Umwickeln eines Polzahns des Stators zu bilden («Einfachwicklung»). Es kann im Sinne der Erfindung auch bevorzugt sein, dass die Wicklung aus mehreren Einzel-Leitern gebildet wird bzw. dass die Wicklung mehr als einen Einzel-Leiter umfasst («Mehrfachwicklung»). Durch das Aufwickeln von mindestens einem Einzel-Leiter kann eine Spule hergestellt werden. Eine Spule umfasst vorzugsweise eine oder mehrere Windungen, die sich jeweils aus einem oder aus mehreren Einzel-Leitern zusammensetzen können. Die Windung kann einen Windungsleitergesamtquerschnitt aufweisen. Wenn beispielsweise der Einzel-Leiter, aus dem die Windung bzw. die Spule hergestellt wird, einen quadratischen Querschnitt aufweist, d.h. eine quadratische Schnittfläche, dann entspricht der Windungsleitergesamtquerschnitt der Fläche dieses quadratischen Querschnitts. Mit anderen Worten entspricht der Windungsleitergesamtquerschnitt der Querschnittsfläche des Einzel-Leiters. Wenn beispielsweise der Einzel-Leiter, aus dem die Windung bzw. die Spule hergestellt wird, einen kreisförmigen oder im Wesentlichen kreisförmigen Querschnitt aufweist, d.h. eine im Wesentlichen kreisförmige Schnittfläche, dann entspricht der Windungsleitergesamtquerschnitt der Fläche dieses im Wesentlichen kreisförmigen Querschnitts. Vorzugsweise entspricht der Windungsleitergesamtquerschnitt dem wicklungsrelevanten Querschnitt eines Einzel-Leiters. Der Windungsleitergesamtquerschnitt entspricht bei einer Einfachwicklung vorzugsweise dem Querschnitt des Windungsleiters, während der Windungsleitergesamtquerschnitt bei einer Mehrfachwicklung vorzugsweise dem Querschnitt der mehreren Windungsleiter entspricht, d.h. der Summe der Querschnitte der einzelnen Windungsleiter.

Die Formulierung «im Wesentlichen kreisförmig» stellt für den Fachmann keine unklare Formulierung dar, weil der Fachmann weiß, dass mit der Formulierung auch solche Windungsleitergesamtquerschnitte umfasst sind, die kleine Abweichungen von einer mathematisch exakten Kreisfläche aufweisen. Beispielsweise sollen im Kontext der vorliegenden Erfindung auch solche Windungsleitergesamtquerschnitte als «im Wesentlichen kreisförmig» betrachtet werden, die kleine Ein- oder Ausbuchtungen oder herstellungsbedingte Kerben oder erhabene Bereich aufweisen. Von den «im Wesentlichen kreisförmigen» Windungsleitergesamtquerschnitten werden vorzugsweise solche Windungsleitergesamtquerschnitte unterschieden, die auf einer anderen geometrischen Grundform beruhen bzw. eine abweichende geometrische Grundfläche aufweisen. Beispielsweise sollen Leiter mit eine rechteckigen, quadratischen, elliptischen, rautenförmigen, trapezförmigen oder dreieckigen Grundfläche nicht als Leiter mit «im Wesentlichen kreisförmigen» Querschnitt betrachtet werden. Solche Leiter werden im Sinne der Erfindung bevorzugt als «Leiter ohne im Wesentlichen kreisförmigen Querschnitt» bezeichnet. Es ist im Sinne der Erfindung bevorzugt, dass ein Querschnitt eines Leiters durch einen gedachten Schnitt durch den Leiter erhalten wird. Der Begriff «Leiter» oder «Einzel-Leiter» wird im Sinne der Erfindung für den Metalldraht verwendet, aus dem die Wicklung des Elektromotors gebildet bzw. gewickelt wird. Dabei kann die Wicklung einen Einzel-Leiter oder mehrere Einzel-Leiter umfassen. Es ist im Sinne der Erfindung bevorzugt, dass die Polzähne des Stators des vorgeschlagenen Elektromotors von dem mindestens einen Leiter umwickelt werden, so dass eine Wicklung und insbesondere eine Spule entsteht. Die Spule ist vorzugsweise dazu eingerichtet, ein Magnetfeld zu erzeugen, wenn sie von einem elektrischen Strom in einer bestimmten Richtung durchflossen wird. Wenn die Stromrichtung geändert wird, ändert sich auch die Orientierung des mit der Spule erzeugten Magnetfelds.

Es ist im Sinne der Erfindung bevorzugt, dass der Referenz-Durchmesser bei einer Wicklung, bei denen mindestens ein Einzel-Leiter keinen im Wesentlichen kreisförmigen Querschnitt aufweist, unter Verwendung einer Querschnittsfläche des Einzel-Leiters ermittelt wird, wobei geprüft wird, welcher Durchmesser unter der Annahme eines Einzel-Leiters mit im Wesentlichen kreisförmigen Querschnitt der ermittelten Querschnittsfläche entspricht. Wenn die Wicklung mehrere Einzel-Leiter umfasst oder aus mehreren Einzel-Leitern gebildet ist, kann der Referenz-Durchmesser einer Summe der Durchmesser der Einzel-Leiter entsprechen. Wenn mehrere Leiter verwendet werden, um die Wicklung zu bilden, können die Einzel-Leiter bzw. die Einzel-Wicklungen vorzugsweise parallel geschaltet werden, um eine Wirkung einer einfach gewickelten Spule zu erreichen.

Wenn zur Herstellung bzw. Wicklung der Spule beispielsweise ein Einzel-Leiter mit einem im Wesentlichen kreisförmigen Querschnitt verwendet wird, wobei ein Durchmesser des Einzel-Leiters beispielsweise 1 mm beträgt, so beträgt seine Grundfläche A = π/4·d² = π/4-mm². In diesem Ausführungsbeispiel der Erfindung würde der Referenz-Durchmesser 1 mm betragen.

Wenn zur Herstellung bzw. Wicklung der Spule beispielsweise zwei Einzel-Leiter mit je einem im Wesentlichen kreisförmigen Querschnitt verwendet werden, wobei die Durchmesser jeweils 1 mm betragen, so beträgt der Referenz-Durchmesser in diesem Ausführungsbeispiel der Erfindung 1,41 mm.

Wenn zur Herstellung bzw. Wicklung der Spule beispielsweise ein Einzel-Leiter mit einem nicht kreisförmigen Querschnitt verwendet wird, sondern beispielsweise ein Einzel-Leiter mit einer quadratischen Grundfläche mit einer Kantenlänge von 1 mm, so wird der Referenz-Durchmesser unter Zuhilfenahme der Grundfläche des nicht-kreisförmigen Leiters ermittelt. Die Grundfläche A des quadratischen Einzel-Leiters mit einer Kantenlänge von 1 mm beträgt A = a² = 1 mm². Dieser Wert für die Grundfläche A wird dann unter Verwendung der Formel A = π/4·d² benutzt, um den Referenz-Durchmesser eines entsprechenden Leiters mit im Wesentlichen kreisförmigen Querschnitt zu ermitteln. Der Durchmesser eines entsprechenden Leiters mit im Wesentlichen kreisförmigen Querschnitt wäre im vorliegenden Fall: d = √(4/π·A) = 2·√(A/π) = 2.0,564 mm = 1,128 mm.

Wenn zur Herstellung bzw. Wicklung der Spule beispielsweise zwei solche Einzel-Leiter einem quadratischen Querschnitt mit einer Kantenlänge von 1 mm verwendet werden, so beträgt der Referenz-Durchmesser in diesem Ausführungsbeispiel der Erfindung 1,6 mm.

Bei diesen Berechnungen des Referenz-Durchmesser wird vorzugsweise ein fiktiver ErsatzDurchmesser berechnet, der im Sinne der Erfindung bevorzugt als «Referenz-Durchmesser» bezeichnet wird. Durch die Verwendung dieses Referenz-Durchmessers können unterschiedliche Querschnittsformen und Mehrfachwicklungen, d.h. Wicklungen der Spulen mit mehr als einem Leiter, besonders gut abgebildet und miteinander verglichen werden.

Es ist im Sinne der Erfindung bevorzugt, dass die Begriffe «Referenz-Durchmesser» und «äquivalenter Windungsleiterdurchmesser D_ÄQUI» im Kontext der vorliegenden Erfindung synonym verwendet werden. Es ist im Sinne der Erfindung bevorzugt, dass der Windungsleitergesamtquerschnitt über folgende Formel in den Referenz-Durchmesser bzw. den äquivalenter Windungsleiterdurchmesser D_ÄQUI umgerechnet werden kann: D_ÄQUI = (4 · Windungsleitergesamtquerschnitt / π) ^ 0,5. Der äquivalente Windungsleiterdurchmesser entspricht also vorzugsweise der Wurzel des Terms in Klammern. Der äquivalente Windungsleiterdurchmesser D_ÄQUI entspricht vorzugsweise einem Ergebnis der Umrechnung des Windungsleitergesamtquerschnitts in einen fiktiven Ersatzdurchmesser, mit dem unterschiedliche Querschnittsformen, die bei Windungsleitem auftreten können, besonders gut mit einem im Wesentlichen kreisförmigen, «runden» Einzel-Leiter verglichen werden können.

Die Polzähne des Stators des vorgeschlagenen Elektromotors sind die Elemente des Elektromotors, auf denen die mindestens eine Wicklung aufgebracht werden kann. Die Polzähne können Blechpakete umfassen und im Sinne der Erfindung bevorzugt auch als «Statorzähne» bezeichnet werden. Der Stator weist darüber hinaus eine Innenöffnung, in der sich üblicherweise der Rotor des Elektromotors bewegen, d.h. rotieren, kann. Die Innenöffnung weist einen Durchmesser auf, der einem Stator-Innendurchmesser entspricht. Es ist im Sinne der Erfindung bevorzugt, dass die Innenöffnung des Stators einem Pferchkreis des Stators entspricht. Der Stator-Innendurchmesser kann vorzugsweise dem Durchmesser des Pferchkreises entsprechen. Vorzugsweise entspricht der Stator-Innendurchmesser einem Durchmesser des Pferchkreis der Innenöffnung des Stators. Dies gilt insbesondere dann, wenn die Innenöffnung des Stators eine nicht-kreisförmige Grundform aufweist. Wenn die Innenöffnung des Stators eine im Wesentlichen kreisförmige Grundform aufweist, fallen Pferchkreis und Stator-Innenkreis vorzugsweise zusammen bzw. der Pferchkreis und Stator-Innenkreis sind kongruent. Der Pferchkreis entspricht im Sinne der Erfindung bevorzugt einem größten Kreis, der in eine nicht-kreisförmige geschlossene Form eingelegt werden kann. Die Innenöffnung des Stators kann im Sinne der Erfindung bevorzugt auch als Stator-Bohrung bezeichnet werden.

Der Stator des Elektromotors kann vorzugsweise einen bevorzugt ferromagnetischen Kern umfassen, wobei dieser bevorzugt ferromagnetische Kern ein- oder mehrteilig ausgebildet sein kann. Wenn der Elektromotor bzw. sein Stator in einer Schnittdarstellung in einer Ebene betrachtet wird, deren Flächennormale einer Rotationsachse des Elektromotors entspricht, kann ein Querschnitt des Stators bzw. des vorzugsweise ferromagnetischen Kerns in Erscheinung treten, der vorzugsweise nicht-ferromagnetische Flächen umschließt, die im Sinne der Erfindung bevorzugt auch als «Stator-Leerflächen» bezeichnet werden. Dabei kann es sich zum einen um die Innenöffnung des Stators handeln und zum anderen um Flächen zur Aufnahme der Wicklung. Es ist im Sinne der Erfindung bevorzugt, dass von der Gesamt-Stator-Leerfläche die Fläche der Innenöffnung des Stators abgezogen werden kann, um eine bereinigte Stator-Leerfläche zu erhalten. Diese bereinigte Stator-Leerfläche kann durch die Anzahl der Polzähne geteilt werden, wobei durch diese Division ein Maß für diejenige Fläche innerhalb des Rotors ermittelt werden kann, die für die Wicklung und etwaige Isolation bzw. Isoliermittel zur Verfügung steht. Durch die Division durch die Anzahl der Polzähne wird insbesondere ein sog. «freier Wickelquerschnitt» erhalten, d.h. eine Fläche, die pro Wicklung bzw. pro Polzahn zur Verfügung steht. Wenn der Stator beispielsweise sechs Polzähne umfasst, weist der Stator vorzugsweise auch sechs freie Wickelquerschnitte auf, die im Sinne der Erfindung vorzugsweise auch als Nuten bezeichnet werden. Die Nuten bzw. freie Wickelquerschnitte liegen vorzugsweise zwischen je zwei Polzähnen angeordnet vor, wobei ca. die Hälfte eines freien Wickelquerschnitts für die Wicklung um den einen benachbarten Polzahn zur Verfügung steht und die andere Hälfte für die Wicklung um den anderen benachbarten Polzahn.

Dieser freie Wickelquerschnitt kann in ein Verhältnis gesetzt werden zu einer Summe der Windungsleitergesamtquerschnitte, wobei die Summe der Windungsleitergesamtquerschnitte vorzugsweise der Summe der Windungsleitergesamtquerschnitte in einem Wickelfenster entspricht. Das Wickelfenster entspricht vorzugsweise der Schnittfläche einer Nut in der Schnittdarstellung, deren Flächennormal einer Rotationsachse des Elektromotors entspricht.

In einem zweiten Aspekt betrifft die Erfindung einen Elektromotor, insbesondere für eine Werkzeugmaschine, wobei der Elektromotor einen Stator mit einer Innenöffnung zur Aufnahme eines Rotors aufweist, wobei die Innenöffnung einen Durchmesser aufweist, der einem Stator-Innendurchmesser entspricht, wobei der Stator eine Reihe von Polzähnen aufweist, die jeweils von einer Wicklung zur Bildung einer Spule umwickelt sind. Es wird ein Verhältnis gebildet aus einer Summe der Windungsleitergesamtquerschnitte und einem freien Wickelquerschnitt, wobei das Verhältnis mit einer Anzahl der Polzähne multipliziert wird und das Produkt größer als 2,2 ist. Das genannte Produkt hat sich ebenfalls als besonders vorteilhaft erwiesen, wenn ein entsprechender Elektromotor in einer akkubetriebenen Werkzeugmaschine eingesetzt wird, wobei die Energieversorgungsvorrichtung der Werkzeugmaschine vorzugsweise dazu eingerichtet ist, große Konstant-Ströme, beispielsweise in einem Bereich von mehr als 50 Ampère (A), bevorzugt mehr als 70 A und am meisten bevorzugt von mehr als 100 A abzugeben. Überraschenderweise kann der vorgeschlagene Elektromotor vor allem in solchen Einsatzfällen ebenfalls besonders gut und effizient gekühlt werden. Außerdem haben Tests gezeigt, dass ein Elektromotor mit dem genannten Produkt einen besonders hohen Wirkungsgrad aufweist, weil etwaige Leerräume innerhalb des Stators des Elektromotors besonders gut mit elektromagnetisch wirksamem Material gefüllt sind bzw. einen hohen Füllgrad aufweisen. Dadurch kann der vorgeschlagene Elektromotor sowohl unter ökologischen, als auch unter ökonomischen Gesichtspunkten optimal und besonders effizient betrieben werden.

Es ist im Sinne der Erfindung bevorzugt, dass es sich bei der Summe der Windungsleitergesamtquerschnitte um die Summe der nicht-isolierten Windungsleitergesamtquerschnitte handelt. Das bedeutet im Sinne der Erfindung bevorzugt, dass lediglich diejenigen Beiträge eines Einzel-Leiters zum Windungsleitergesamtquerschnitt berücksichtigt werden, die elektromagnetisch wirksam sind, indem sie beispielsweise auf das elektrisch-leitfähige Material in einem Einzel-Leiter zurückgehen. Vorzugsweise leisten Isolierungen und Isoliermaterial, das häufig aus Kunststoff besteht, keinen elektromagnetischen Beitrag zur Erzeugung einer Rotationsbewegung in dem Elektromotor, so dass im Kontext dieser Ausgestaltung der Erfindung vorzugsweise die Summe der nicht-isolierten Windungsleitergesamtquerschnitte verwendet und in Relation gesetzt wird zu einem freien Wickelquerschnitt des Stators.

Es ist im Sinne der Erfindung bevorzugt, dass das Produkt größer als 2,5, bevorzugt größer als 2,8 ist. Durch die genannten Werte kann die Antriebs- und Wärmeabfuhreffizienz des vorgeschlagenen Elektromotors weiter gesteigert werden.

Die Erfinder haben erkannt, dass es wünschenswert ist, wenn der Füllgrad der Nuten des Stators möglichst hoch bzw. die Leerräume innerhalb des Stators möglichst klein sind. Dieser Grundgedanke wird mit den vorgeschlagenen Elektromotoren erreicht. Insbesondere kann mit der Erfindung eine Minimierung des Leervolumens innerhalb des Stators erreicht werden, um eine leistungsoptimierte elektromagnetische Gestaltung der Stator-Topologie zu ermöglichen.

Es ist im Sinne der Erfindung bevorzugt, dass eine Anzahl der Polzähne in einem Bereich von zwei bis zwölf, bevorzugt vier bis zehn, besonders bevorzugt zwischen sechs und acht liegt. Ein Stator mit der genannten Anzahl von Polzähnen kann auf der einen Seite besonders einfach hergestellt und gewickelt werden, auf der anderen Seite kann dadurch ein hoher Wirkungsgrad und eine gute Entwärmung des Stators sichergestellt werden. Es ist im Sinne der Erfindung bevorzugt, dass auch eine Anzahl Nuten in einem Bereich von zwei bis zwölf, bevorzugt vier bis zehn, besonders bevorzugt zwischen sechs und acht liegt. Es ist im Sinne der Erfindung bevorzugt, dass der Elektromotor ein Innenläufer-Motor ist.

Es ist im Sinne der Erfindung bevorzugt, dass der Elektromotor segmentiert vorliegt, wobei eine Anzahl der Segmente des Elektromotors in einem Bereich von zwei bis zwölf, bevorzugt vier bis zehn, besonders bevorzugt zwischen sechs und acht liegt. Durch die Segmentierung des Elektromotors kann insbesondere die Herstellung der Wicklung vereinfacht werden. Es ist im Sinne der Erfindung bevorzugt, dass der Metalldraht, aus dem die Spulen gewickelt werden, innerhalb der Nuten verlaufen kann und um die Polzähne herumgewickelt vorliegen. Die Nuten können Schlitze aufweisen, durch den der Draht beim Wickelprozess in die Nut eingeführt werden kann. Die Schlitze können in Richtung der Innenbohrung des Stators vorliegen und den Innenraum des Stators, der vorzugsweise von der Innenbohrung zur Aufnahme des Rotors gebildet wird, mit der Nut selber verbinden. Mithin stellen die Schlitze eine Verbindung her zwischen dem Innenraum des Stators und den Nuten. Die Polzähne des Stators des vorgeschlagenen Elektromotors können radial nach innen, d.h. in Richtung des Rotors bzw. der Statorbohrung, ausgerichtet sein. Es kann im Sinne der Erfindung allerdings auch bevorzugt sein, dass die Polzähne des Stators nach außen gerichtet sind, so dass der Rotor von außen gewickelt werden kann.

Es ist im Sinne der Erfindung bevorzugt, dass Leiter zur Herstellung der Wicklung verwendet werden, die in ihrer Gesamtheit die Nuten bzw. die Leervolumina (oder in einer Draufsicht: die Leerflächen) des Stators besonders gut ausfüllen. Beispielsweise können Leiter mit solchen Querschnitten verwendet werden, die besonders gut geeignet sind, eine vorgegebene Fläche, wie die Schnittfläche durch eine Nut des vorgeschlagenen Stators, besonders effizient auszufüllen. Angestrebt wird dabei eine möglichst lückenlose Parkettierung der Nutflächen, wie beispielsweise bei einem Penrose-Muster. Beispielsweise können Leiter mit rechteckigen oder quadratischen Querschnitten verwendet werden, weil diese besonders gut und versatzarm in einer bevorzugt zweidimensionalen Fläche aneinandergereiht werden können. Auch denkbar sind wabenförmige oder sechseckige, sowie andere mehr mehreckige, polygonale Querschnitte bzw. Leiter mit solchen Querschnitten, um einen besonders hohen Füllgrad der Nuten und/oder Leerflächen mit elektromagnetisch wirksamem Material, insbesondere dem Leiter- bzw. Drahtmaterial, zu erreichen.

Die vorgeschlagenen Elektromotoren weisen jeweils besonders hohe Nutfüllgrade auf, d.h. die Nuten innerhalb des Stators sind besonders effizient mit elektromagnetisch wirksamem Material ausgefüllt. Die Füllung erfolgt vorzugsweise durch die Wicklungen, mit denen Spulen hergestellt werden, wobei die Wicklungen vorzugsweise mindestens einen Leiter umfassen («Einfachwicklung»). Die Wicklungen können allerdings auch mehrere Leiter umfassen («Mehrfachwicklung»). Es hat sich gezeigt, dass hohe Nutfüllgrade, wie sie im Kontext der Erfindung ermöglicht werden, zu einer verbesserten Belüftung des Elektromotors führen. Das bedeutet, dass sowohl eine Durchzugslüftung verbessert werden kann, wenn die Nuten des Stators des Elektromotors besser mit Wicklungsmaterial gefüllt sind. Darüber hinaus kann auch die Außenbelüftung verbessert werden, wenn ein hoher Nutfüllgrad vorliegt. Bei beiden Kühlungsmethoden kann mit der Erfindung die Luftmenge, die in unmittelbare Nähe zur Wicklung bzw. zum Wicklungsmaterial gebracht wird, deutlich reduziert werden, so dass insbesondere auch weniger Dreck oder Staub in den Bereich der Wicklung gelangt. Dadurch kann ein Zusetzen der Leerräume in den Nuten zwischen den Wicklungsleitern wirksam verhindert werden.

In einem zweiten Aspekt betrifft die Erfindung eine Werkzeugmaschine mit einem der vorgeschlagenen Elektromotoren. Es ist im Sinne der Erfindung bevorzugt, dass die Werkzeugmaschine lösbar mit einer Energieversorgungsvorrichtung verbindbar ist, wobei die Energieversorgungsvorrichtung dazu eingerichtet ist, die Werkzeugmaschine mit elektrischer Energie zu versorgen.

In einem weiteren Aspekt betrifft die Erfindung ein System, das eine erfindungsgemäße Werkzeugmaschine und eine Energieversorgungsvorrichtung umfasst, wobei die Energieversorgungsvorrichtung mindestens eine Energiespeicherzelle («Zelle») umfasst, wobei die mindestens eine Energiespeicherzelle einen Innenwiderstand DCR_I von kleiner als 10 Milliohm aufweist. Die für die Elektromotoren eingeführten Begriffe, Definitionen und technischen Vorteile gelten vorzugsweise für die Werkzeugmaschine und das System analog.

In bevorzugten Ausgestaltungen der Erfindung kann der Innenwiderstand DCR_I der mindestens einen Zelle kleiner als 8 Milliohm und bevorzugt kleiner 6 Milliohm sein. Dabei wird der Innenwiderstand DCR_I vorzugsweise nach der Norm IEC61960 gemessen. Der Innenwiderstand DCR_I stellt insbesondere den Widerstand einer Zelle der Energieversorgungsvorrichtung dar, wobei etwaige Komponenten oder Zubehörteile der Zelle keinen Beitrag zum Innenwiderstand DCR_I leisten. Ein geringer Innenwiderstand DCR_I ist von Vorteil, da dadurch unerwünschte Wärme, die abgeführt werden muss, überhaupt nicht entsteht. Der Innenwiderstand DCR_I ist insbesondere ein Gleichstrom-Widerstand, der im Inneren einer Zelle der vorgeschlagenen Energieversorgungsvorrichtung gemessen werden kann. Selbstverständlich kann der Innenwiderstand DCR_I auch Zwischenwerte, wie 6,02 Milliohm; 7,49 Milliohm; 8,33 Milliohm; 8,65 Milliohm oder 9,5 Milliohm, annehmen.

Es hat sich gezeigt, dass mit dem Innenwiderstand DCR_I der mindestens einen Zelle von kleiner als 10 Milliohm eine Energieversorgungsvorrichtung bereitgestellt werden kann, die besonders gute thermische Eigenschaften in dem Sinne aufweist, dass sie besonders gut bei niedrigen Temperaturen betrieben werden kann, wobei der Kühlaufwand überraschend gering gehalten werden kann. Insbesondere ist eine Energieversorgungsvorrichtung mit einem Zell-Innenwiderstand DCR_I von kleiner als 10 Milliohm besonders gut geeignet, um besonders leistungsstarke Werkzeugmaschinen mit elektrischer Energie zu versorgen. Solche Energieversorgungsvorrichtungen können somit einen wertvollen Beitrag dazu leisten, einen Einsatz von akkubetriebenen Werkzeugmaschinen auch in solchen Anwendungsgebieten zu ermöglichen, von denen die Fachwelt bisher davon ausgegangen war, dass diese Anwendungsgebiete akkubetriebenen Werkzeugmaschinen nicht zugänglich sind.

Vorteilhafterweise kann mit eine solchen Energieversorgungsvorrichtung eine Möglichkeit dafür geschaffen werden, eine batterie- oder akkubetriebene Werkzeugmaschine mit einer erfindungsgemäßen Energieversorgungsvorrichtung über einen langen Zeitraum mit einer hohen Abgabeleistung zu versorgen, ohne die umliegenden Kunststoffbauteile oder die Zellchemie innerhalb der Zellen der Energieversorgungsvorrichtung zu schädigen.

Bei der Energieversorgungsvorrichtung handelt es sich vorzugsweise um eine Energieversorgungsvorrichtung mit einer besonders hohen Lebensdauer und/oder um eine Energieversorgungsvorrichtung, die dazu eingerichtet ist, besonders hohe Ströme, insbesondere Konstant-Ström von mehr als 50 Ampère, bevorzugt mehr als 70 Ampère und am meisten bevorzugt von mehr als 100 Ampère, abzugeben. Die besonders hohe Lebensdauer kann vorzugsweise dazu führen, dass die Energieversorgungsvorrichtung besonders viele Einschubvorgänge bzw. Einschubzyklen übersteht, ohne zu verschleißen. Darüber hinaus kann die besonders hohe Lebensdauer bedeuten, dass die chemischen Bestandteile der Energieversorgungsvorrichtung dazu eingerichtet sind, häufiger als bisherige Energieversorgungsvorrichtungen aufgeladen werden zu können, ohne wesentlich zu altern.

Ein wesentlicher Vorteil der Erfindung besteht darin, dass die vorgeschlagenen Elektromotoren einen hohen Nutzfüllgrad aufweisen, der es ermöglicht mit hohen Konstant-Abgabeströmen in Bereichen von als 50 Ampère, bevorzugt mehr als 70 Ampère und am meisten bevorzugt von mehr als 100 Ampère gut umzugehen und diese hohen Ströme optimale in eine Rotationsbewegung zum Antrieb der Werkzeugmaschine umzusetzen. Dadurch können die Vorteile neuer Zellund Batterietechnologien mit Hilfe der Erfindung optimal ausgenutzt werden. Mithin kann mit der Erfindung ein effizienter Einsatz von Energieversorgungsvorrichtungen in batteriebetriebenen Werkzeugmaschine ermöglicht werden, dies insbesondere auch für Applikationen und Anwendungen, die sehr hohe elektrische Leistungsanforderungen an das System stellen.

Es ist im Sinne der Erfindung bevorzugt, dass ein Verhältnis eines Widerstands der mindestens einen Zelle zu einer Oberfläche A der mindestens einen Zelle kleiner als 0,2 Milliohm/cm² ist, bevorzugt kleiner als 0,1 Milliohm/cm² und am meisten bevorzugt kleiner als 0,05 Milliohm/cm². Bei einer zylindrischen Zelle kann die Oberfläche der Zelle beispielsweise von der Außenfläche des Zylinders, sowie der Oberseite und der Unterseite der Zelle gebildet werden. Es kann darüber hinaus im Sinne der Erfindung bevorzugt sein, dass ein Verhältnis eines Widerstands der mindestens einen Zelle zu einem Volumen V der mindestens einen Zelle kleiner als 0,4 Milliohm/cm³ ist, bevorzugt kleiner als 0,3 Milliohm/cm³ und am meisten bevorzugt kleiner als 0,2 Milliohm/cm³. Der Fachmann kennt für übliche geometrische Formen, wie Quader, Würfel, Kugel oder dergleichen, die Formeln zur Berechnung der Oberfläche oder des Volumens eines solchen geometrischen Körpers. Der Begriff «Widerstand» bezeichnet im Sinne der Erfindung bevorzugt den Innenwiderstand DCR_I, der vorzugsweise nach der Norm IEC61960 gemessen werden kann. Vorzugsweise handelt es sich dabei um einen Gleichstrom-Widerstand.

Es ist im Sinne der Erfindung bevorzugt, dass die mindestens eine Zelle einen Erwärmungskoeffizienten von kleiner als 1,0 W/(Ah·A) aufweist, bevorzugt kleiner als 0,75 W/(Ah·A) und besonders bevorzugt von kleiner als 0,5 W/(Ah·A). Darüber hinaus kann die mindestens eine Zelle dazu ausgebildet sein, im Wesentlichen konstant einen Strom von größer als 1.000 Ampère/Liter abzugeben. Die Angabe des Entladestroms erfolgt in Bezug auf das Volumen der mindestens einen Zelle, wobei als Einheit für das Volumen die Raum-Maßeinheit «Liter» (I) verwendet wird. Die erfindungsgemäßen Zellen sind somit in der Lage, pro Liter Zellvolumen einen Entladestrom von im Wesentlichen konstant größer als 1.000 A abzugeben. Mit anderen Worten ist eine Zelle mit einem Volumen von 1 Liter in der Lage, einen im Wesentlichen konstanten Entladestrom von größer als 1.000 A abzugeben, wobei die mindestens eine Zelle darüber hinaus einen Erwärmungskoeffizienten von kleiner als 1,0 W/(Ah·A) aufweist. In bevorzugten Ausgestaltungen der Erfindung kann die mindestens eine Zelle der vorgeschlagenen Energieversorgungsvorrichtung einen Erwärmungskoeffizienten von kleiner als 0,75 W/(Ah·A), bevorzugt kleiner als 0,5 W/ (Ah·A) aufweisen. Die Einheit des Erwärmungskoeffizienten lautet Watt / (Ampèrestunden . Ampère). Selbstverständlich kann der Erwärmungskoeffizient auch Zwischenwerte, wie 0,56 W/(Ah.A); 0,723 W/(Ah.A) oder 0,925 W/(Ah.A) aufweisen.

Die Erfindung ermöglicht vorteilhafterweise die Bereitstellung einer Energieversorgungsvorrichtung mit mindestens einer Zelle, die eine verringerte Erwärmung aufweist und somit besonders gut für die Versorgung von Werkzeugmaschine geeignet ist, bei denen hohe Leistungen und hohe Ströme, vorzugsweise Konstant-Ströme, für den Betrieb erwünscht sind. Insbesondere kann mit der Erfindung eine Energieversorgungsvorrichtung für eine Werkzeugmaschine bereitgestellt werden, bei der die Wärme, die gegebenenfalls bei Betrieb der Werkzeugmaschine und bei Abgabe von elektrischer Energie an die Werkzeugmaschine entsteht, besonders einfach und unkompliziert abgeführt werden kann. Tests haben gezeigt, dass mit der Erfindung nicht nur vorhandene Wärme besser abgeführt werden kann. Vielmehr wird mit der Erfindung verhindert, dass Wärme entsteht bzw. die bei Betrieb der Werkzeugmaschine erzeugte Wärmemenge kann mit der Erfindung erheblich reduziert werden. Vorteilhafterweise kann mit der Erfindung eine Energieversorgungsvorrichtung bereitgestellt werden, die vor allem auch solche Werkzeugmaschine optimal mit elektrischer Energie versorgen kann, die hohe Anforderungen an Leistung und Entladestrom stellen. Mit anderen Worten kann mit der Erfindung eine Energieversorgungsvorrichtung für besonders leistungsstarke Werkzeugmaschine bereitgestellt werden, mit denen beispielsweise auf Baustellen schwere Bohr- oder Abbrucharbeiten verrichtet werden.

Der Begriff «Werkzeugmaschine» ist im Sinne der Erfindung als typisches Gerät zu verstehen, dass auf einer Baustelle, beispielsweise einer Hochbau-Baustelle und/oder einer Tiefbau-Baustelle, verwendet werden kann. Es kann sich um Bohrhämmer, Meißelgeräte, Kernbohrgerät, Winkel- oder Trennschleifer, Trenngeräte oder dergleichen handeln, ohne darauf beschränkt zu sein. Darüber hinaus können Hilfsgeräte, wie sie gelegentlich auf Baustellen verwendet werden, wie Lampen, Radios, Staubsauger, Meßgeräte, Bau-Roboter, Schubkarren, Transportgeräte, Vorschubvorrichtungen oder andere Hilfsgeräte «Werkzeugmaschine» im Sinne der Erfindung sein. Die Werkzeugmaschine kann insbesondere eine mobile Werkzeugmaschine sein, wobei die vorgeschlagene Energieversorgungsvorrichtung insbesondere auch in stationären Werkzeugmaschinen, wie ständergeführten Bohrgeräten oder Kreissägen, zum Einsatz kommen kann. Bevorzugt sind aber handgeführte Werkzeugmaschinen, die insbesondere akku- oder batteriebetrieben sind.

Es ist im Sinne der Erfindung bevorzugt, dass die mindestens eine Zelle eine Temperatur-Abkühl-Halbwertzeit kleiner als 12 Minuten aufweist, bevorzugt kleiner 10 Minuten, besonders bevorzugt kleiner 8 Minuten. Das bedeutet im Sinne der Erfindung bevorzugt, dass sich bei freier Konvektion eine Temperatur der mindestens einen Zelle in weniger als 12, 10 oder 8 min halbiert. Die Temperatur-Abkühl-Halbwertzeit wird vorzugsweise in einem Ruhezustand der Energieversorgungsvorrichtung ermittelt, d.h. wenn die Energieversorgungsvorrichtung nicht in Betrieb, d.h. mit einer Werkzeugmaschine verbunden vorliegt. Vor allem Energieversorgungsvorrichtungen mit Temperatur-Abkühl-Halbwertzeiten von kleiner als 8 min haben sich als besonders geeignet für den Einsatz bei leistungsstarken Werkzeugmaschinen gezeigt. Selbstverständlich kann die Temperatur-Abkühl-Halbwertzeit auch einen Wert von 8,5 Minuten, 9 Minuten 20 Sekunden oder von 11 Minuten 47 Sekunden aufweisen.

Durch die überraschend geringe Temperatur-Abkühl-Halbwertzeit der vorgeschlagenen Energieversorgungsvorrichtung verweilt die im Betrieb der Werkzeugmaschine oder bei ihrem Laden erzeugte Wärme nur für kurze Zeit innerhalb der mindestens einen Zelle. Auf diese Weise kann die Zelle besonders schnell wieder aufgeladen werden und steht zügig für einen erneuten Einsatz in der Werkzeugmaschine zur Verfügung. Vielmehr kann die thermische Belastung der Komponente der Energieversorgungsvorrichtung oder der Werkzeugmaschine mit der vorgeschlagenen Energieversorgungsvorrichtung erheblich reduziert werden. Dadurch kann die Energieversorgungsvorrichtung geschont und ihre Lebenszeit verlängert werden.

Es ist im Sinne der Erfindung bevorzugt, dass die mindestens eine Zelle in einem Batteriepack der Energieversorgungsvorrichtung angeordnet ist. In dem Batteriepack können vorzugsweise eine Reihe von Einzelzellen zusammengefasst werden und auf diese Weise optimal in die Energieversorgungsvorrichtung eingefügt werden. Beispielsweise können 5, 6 oder 10 Zellen einen Batteriepack bilden, wobei auch ganzzahlige Vielfache dieser Zahlen möglich sind. Beispielsweise kann die Energieversorgungsvorrichtung einzelne Zellstränge aufweisen, die beispielsweise 5, 6 oder 10 Zellen umfassen können. Eine Energieversorgungsvorrichtung mit beispielsweise drei Strängen à fünf Zellen kann beispielsweise 15 Einzelzellen umfassen.

Es ist im Sinne der Erfindung bevorzugt, dass die Energieversorgungsvorrichtung eine Kapazität von wenigstens 2,2 Ah, bevorzugt wenigstens 2,5 Ah aufweist. Tests haben gezeigt, dass die genannten Kapazitätswerte besonders gut für den Einsatz von leistungsstarken Werkzeugmaschinen im Baugewerbe geeignet sind und den dortigen Anforderungen an Verfügbarkeit von elektrischer Energie und möglicher Nutzungsdauer der Werkzeugmaschine besonders gut entsprechen.

Vorzugsweise ist die mindestens eine Zelle der Energieversorgungsvorrichtung dazu eingerichtet, einen Entladestrom über wenigstens 10 s von wenigstens 20 A abzugeben. Beispielsweise kann eine Zelle der Energieversorgungsvorrichtung dazu ausgebildet sein, einen Entladestrom über wenigstens 10 s von wenigstens 20 A, insbesondere wenigstens 25 A, bereitzustellen. Mit anderen Worten kann die mindestens eine Zelle einer Energieversorgungsvorrichtung dazu eingerichtet sein, einen Dauerstrom von wenigstens 20 A, insbesondere von wenigstens 25 A, bereitzustellen.

Gleichfalls ist es denkbar, dass Spitzenströme, insbesondere kurzzeitige Spitzenströme, zu einer starken Erwärmung der Energieversorgungsvorrichtung führen können. Daher ist eine Energieversorgungsvorrichtung mit einer leistungsstarken Kühlung, wie sie durch die vorliegend beschriebenen Maßnahmen erzielt werden kann, besonders vorteilhaft. Denkbar ist beispielsweise, dass die mindestens eine Zelle der Energieversorgungsvorrichtung über 1 Sekunde hinweg wenigstens 50 A bereitstellen kann. Mit anderen Worten ist es im Sinne der Erfindung bevorzugt, dass die mindestens eine Zelle der Energieversorgungsvorrichtung dazu eingerichtet ist, einen Entladestrom über wenigstens 1 s von wenigstens 50 A bereitzustellen. Werkzeugmaschinen können oftmals kurzzeitig hohe Leistungen benötigen. Eine Energieversorgungsvorrichtung, deren Zellen dazu in der Lage sind, einen derartigen Spitzenstrom und/oder einen derartigen Dauerstrom abzugeben, kann daher besonders geeignet für leistungsstarke Werkzeugmaschinen sein, wie sie auf Baustellen eingesetzt werden.

Es ist im Sinne der Erfindung bevorzugt, dass die mindestens eine Zelle einen Elektrolyten umfasst, wobei der Elektrolyt bei Raumtemperatur vorzugsweise in einem flüssigen Aggregatzustand vorliegt. Der Elektrolyt kann Lithium, Natrium und/oder Magnesium umfassen, ohne darauf beschränkt zu sein. Insbesondere kann der Elektrolyt Lithium-basiert sein. Alternativ oder ergänzend kann er auch Natrium-basiert sein. Denkbar ist auch, dass der Akkumulator Magnesium-basiert ist. Die elektrolyt-basierte Energieversorgungsvorrichtung kann eine Nennspannung von wenigstens 10 Volt (V), bevorzugt wenigstens 18 V, insbesondere von wenigstens 28 V, beispielsweise 36 V, aufweisen. Ganz besonders bevorzugt ist eine Nennspannung in einem Bereich von 18 bis 22 V, insbesondere in einem Bereich von 21 bis 22 V. Es ist im Sinne der Erfindung ganz besonders bevorzugt, dass eine Nennspannung der Energieversorgungsvorrichtung in einem Bereich von 12 bis 50 V liegt. Die mindestens eine Zelle der Energieversorgungsvorrichtung kann beispielsweise eine Spannung von 3,6 V aufweisen, ohne darauf beschränkt zu sein.

Es ist im Sinne der Erfindung bevorzugt, dass die Energieversorgungsvorrichtung beispielsweise mit einer Laderate von 1,5 C, bevorzugt 2 C und am meisten bevorzugt von 3 C geladen wird. Unter einer Laderate xC kann dabei die Stromstärke verstanden werden, die benötigt wird, um eine entladene Energieversorgungsvorrichtung in einem dem Zahlwert x der Laderate x C entsprechenden Bruchteil einer Stunde vollständig aufzuladen. Eine Laderate von 3 C ermöglicht beispielsweise ein vollständiges Aufladen des Akkumulators binnen 20 Minuten.

Es ist im Sinne der Erfindung bevorzugt, dass die mindestens Zelle der Energieversorgungsvorrichtung eine Oberfläche A und ein Volumen V aufweist, wobei ein Verhältnis A/V von Oberfläche zu Volumen größer ist als das Sechsfache, bevorzugt das Achtfache und besonders bevorzugt das Zehnfache des Kehrwerts der dritten Wurzel des Volumens.

Die Formulierung, dass die Oberfläche A der mindestens einen Zelle ist größer ist als beispielsweise das Achtfache der dritten Wurzel des Quadrats des Volumens V kann vorzugsweise auch durch die Formel ***A***>8****V***^(**2**/**3**) zum Ausdruck gebracht werden. In einer anderen Schreibweise kann dieser Zusammenhang dadurch beschrieben werden, dass das Verhältnis A/V von Oberfläche zu Volumen größer ist als das Achtfache des Kehrwerts der dritten Wurzel des Volumens.

Dabei sind zur Prüfung, ob die obige Relation erfüllt ist, stets Werte in der gleichen Grundeinheit einzusetzen. Wenn beispielsweise ein Wert für die Oberfläche in m² in die obige Formel eingesetzt wird, so wird für das Volumen vorzugsweise ein Wert in der Einheit m³ eingesetzt. Wenn beispielsweise ein Wert für die Oberfläche in der Einheit cm² in die obige Formel eingesetzt wird, so wird für das Volumen vorzugsweise ein Wert in der Einheit cm³ eingesetzt. Wenn beispielsweise ein Wert für die Oberfläche in der Einheit mm² in die obige Formel eingesetzt wird, so wird für das Volumen vorzugsweise ein Wert in der Einheit mm³ eingesetzt.

Zellgeometrien, die beispielsweise die Relation von ***A***>8****V***^(**2**/**3**) erfüllen, weisen vorteilhafterweise ein besonders günstiges Verhältnis zwischen der für die Kühlwirkung maßgeblichen Außenfläche der Zelle zum Zellvolumen auf. Dabei haben die Erfinder erkannt, dass das Verhältnis von Oberfläche zu Volumen der mindestens einen Zelle der Energieversorgungsvorrichtung einen wichtigen Einfluss auf die Entwärmung der Energieversorgungsvorrichtung hat. Die verbesserte Kühlfähigkeit der vorgeschlagenen Energieversorgungsvorrichtung kann vorteilhafterweise durch eine Erhöhung der Zelloberfläche bei gleichbleibendem Volumen und geringem Innenwiderstand der mindestens einen Zelle erreicht werden. Es ist im Sinne der Erfindung bevorzugt, dass eine geringe Zelltemperatur bei gleichzeitig hoher Leistungsabgabe vorzugsweise dann ermöglicht werden kann, wenn der Innenwiderstand der Zelle reduziert wird. Die Reduzierung des Innenwiderstands der mindestens einen Zelle kann zu einer geringeren Wärmeentstehung führen. Darüber hinaus kann eine geringe Zelltemperatur durch die Verwendung von Zellen, bei denen die Oberfläche A von mindestens einer Zelle innerhalb der Energieversorgungsvorrichtung größer ist als das Sechsfache, bevorzugt das Achtfache und besonders bevorzugt das Zehnfache der dritten Wurzel des Quadrats des Volumens V der mindestens einen Zelle. Dadurch kann insbesondere die Wärmeabgabe an die Umgebung verbessert werden.

Es hat sich gezeigt, dass Energieversorgungsvorrichtungen, deren Zellen die genannte Relation erfüllen, deutlich besser gekühlt werden können als bisher bekannte Energieversorgungsvorrichtungen mit beispielsweise zylinderförmigen Zellen. Die obige Relation kann beispielsweise dadurch erfüllt werden, dass die Zellen der vorgeschlagenen Energieversorgungsvorrichtung zwar eine zylinderförmige Grundform aufweisen, aber zusätzliche Oberflächen vergrößernde Elemente auf ihrer Oberfläche angeordnet sind. Dabei kann es sich beispielsweise um Rippen, Zähne oder dergleichen handeln. Es können im Rahmen der Erfindung auch Zellen verwendet werden, die keine zylinderförmige oder zylindrische Grundform aufweisen, sondern vollkommen anders geformt sind. Beispielsweise können die Zellen der vorgeschlagenen Energieversorgungsvorrichtung eine im Wesentlichen quader- oder würfelförmige Grundform aufweisen. Der Begriff "im Wesentlichen" ist dabei für den Fachmann nicht unklar, weil der Fachmann weiß, dass im Kontext der vorliegenden Erfindung beispielsweise auch ein Quader mit Einbuchtungen oder abgerundeten Ecken und/oder Kanten unter den Begriff "im Wesentlichen quaderförmig" fallen soll.

Es ist im Sinne der Erfindung bevorzugt, dass die mindestens eine Zelle einen Zellkern aufweist, wobei kein Punkt innerhalb des Zellkerns mehr als 5 mm von einer Oberfläche der Energieversorgungsvorrichtung entfernt ist. Wenn die Energieversorgungsvorrichtung entladen wird, beispielsweise wenn sie mit einer Werkzeugmaschine verbunden ist und mit der Werkzeugmaschine gearbeitet wird, kann im Zellkern Wärme entstehen. Diese Wärme kann in dieser konkreten Ausgestaltung der Erfindung auf verhältnismäßig kurzem Wege bis zur Oberfläche der Zelle der Energieversorgungsvorrichtung transportiert werden. Von der Oberfläche kann die Wärme optimal abgeführt werden. Somit kann eine solche Energieversorgungsvorrichtung eine gute Kühlung, insbesondere eine vergleichsweise gute Selbstkühlung, aufweisen. Die Zeitdauer bis zum Erreichen der Grenztemperatur kann verlängert und/oder das Erreichen der Grenztemperatur vorteilhafterweise gänzlich vermieden werden. Als weiterer Vorteil der Erfindung kann Innerhalb des Zellkerns eine verhältnismäßig homogene Temperaturverteilung erreicht werden. Hierdurch kann sich eine gleichmäßige Alterung des Akkumulators ergeben. Dies wiederum kann die Lebensdauer der Energieversorgungsvorrichtung erhöhen.

Es ist im Sinne der Erfindung bevorzugt, dass die mindestens eine Zelle eine maximale Konstant-Strom-Abgabe von größer als 20 Ampère, bevorzugt größer als 30 Ampère, am meisten bevorzugt größer 40 Ampère aufweist. Die maximale Konstant-Strom-Abgabe ist die Menge an Strom einer Zelle oder einer Energieversorgungsvorrichtung, die entnommen werden kann, ohne dass die Zelle oder die Energieversorgungsvorrichtung an eine Temperatur-Obergrenze gelangt. Mögliche Temperatur-Obergrenze können in einem Bereich von 60 °C oder 70 °C liegen, ohne darauf beschränkt zu sein. Die Einheit der maximalen Konstant-Strom-Abgabe ist Ampère.

Bei allen Wertebereichen, die im Kontext der vorliegenden Erfindung genannt werden, sollen stets auch alle Zwischenwerte als offenbart gelten. Als Beispiel sollen bei der maximalen Konstant-Strom-Abgabe auch Werte zwischen 20 und 30 A als offenbart gelten, also zum Beispiel 21; 22,3; 24, 25,55 oder 27,06 Ampère usw. Darüber hinaus sollen auch Werte zwischen 30 und 40 A als offenbart gelten, also zum Beispiel 32; 33,3; 36, 38,55 oder 39,07 Ampère usw.

Es ist im Sinne der Erfindung bevorzugt, dass die Energieversorgungsvorrichtung eine Entlade-C-Rate von größer als 80 · t^(-0,45) aufweist, wobei der Buchstabe "t" für die Zeit in der Einheit Sekunden steht. Die C-Rate ermöglicht vorteilhafterweise eine Quantifizierung der Lade- und Entladeströme für Energieversorgungsvorrichtungen, wobei die hier verwendete Enlade-C-Rate insbesondere die Quantifizierung der Entladeströme von Energieversorgungsvorrichtungen ermöglicht. Mit der C-Rate können beispielsweise die maximal zulässigen Lade- und Entladeströme angegeben werden. Diese Lade- und Entladeströme hängen vorzugsweise von der Nennkapazität der Energieversorgungsvorrichtung ab. Die ungewöhnlich hohe Entlade-C-Rate von 80 · t^(-0,45) bedeutet vorteilhafterweise, dass mit der vorgeschlagenen Energieversorgungsvorrichtung besonders hohe Entladeströme erreicht werden können, die für den Betrieb von leistungsstarken Werkzeugmaschinen im Baugewerbe erforderlich sind. Beispielsweise können die Entladeströme in einem Bereich von größer als 40 Ampère, bevorzugt größer als 60 Ampère oder noch mehr bevorzugt größer als 80 Ampère liegen.

Es ist im Sinne der Erfindung bevorzugt, dass die Zelle einen Zelltemperaturgradienten von kleiner 10 Kelvin aufweist. Der Zelltemperaturgradient ist vorzugsweise ein Maß für Temperaturunterschiede innerhalb der mindestens einen Zelle der vorgeschlagenen Energieversorgungsvorrichtung, wobei es im Sinne der Erfindung bevorzugt ist, dass die Zelle eine möglichst gleichmäßige Temperaturverteilung aufweist, d.h. dass eine Temperatur in einem inneren Bereich der Zelle möglichst wenig abweicht von einer Temperatur, die im Bereich einer Mantel- oder Außenfläche der Zelle gemessen wird.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: schematische Schnittzeichnung durch eine bevorzugte Ausgestaltung des Stators des vorgeschlagenen Elektromotors
- Fig. 2: weitere schematische Schnittzeichnung durch eine bevorzugte Ausgestaltung des Stators des vorgeschlagenen Elektromotors
- Fig. 3: schematische Schnittzeichnung durch eine bevorzugte Ausgestaltung eines Einzelsegments des Stators des vorgeschlagenen Elektromotors
- Fig. 4: schematische Darstellung eines Windungsleitergesamtquerschnitt und eines Referenz-Durchmesser bzw. eines äquivalenten Windungsleiterdurchmesser
- Fig. 5: schematische Darstellung des Stators mit Summen der Windungsleitergesamtquerschnitte
- Fig. 6: schematische Darstellung verschiedener Statoren
- Fig. 7: schematische Seitenansicht einer bevorzugten Ausgestaltung der Energieversorgungsvorrichtung
- Fig. 8: schematische Seitenansicht einer Werkzeugmaschine mit einer bevorzugten Ausgestaltung der Energieversorgungsvorrichtung
- Fig. 9: schematische Ansicht einer möglichen Ausgestaltung eines Segments des Stators

### Ausführungsbeispiele und Figurenbeschreibung:

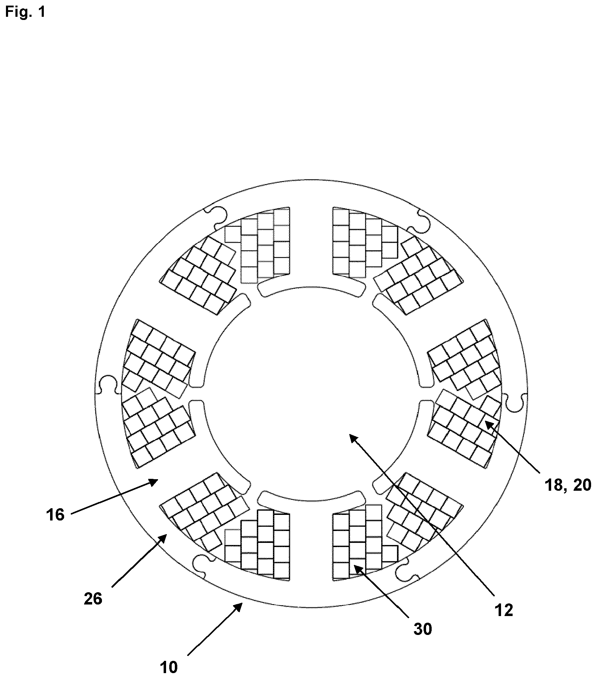

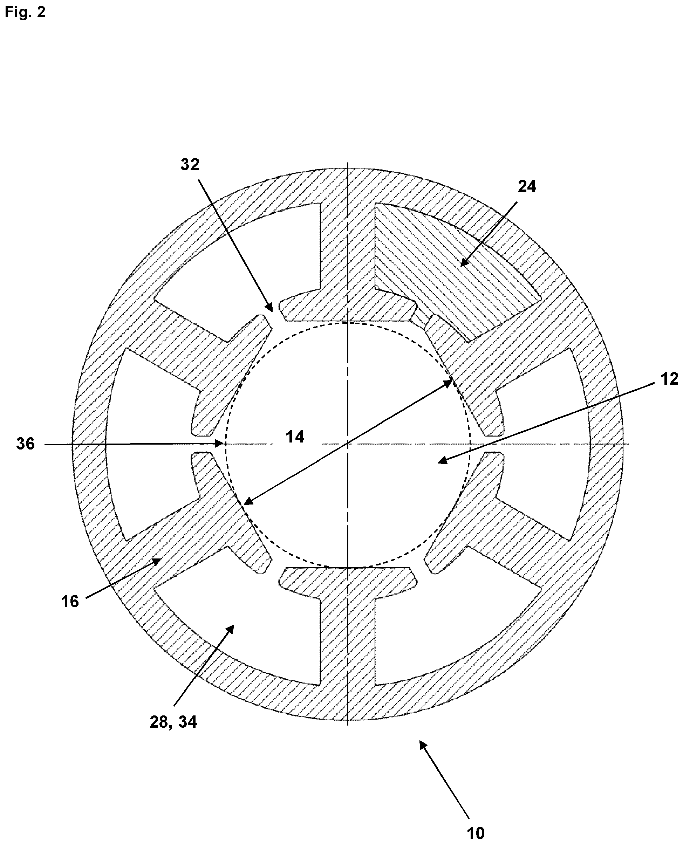

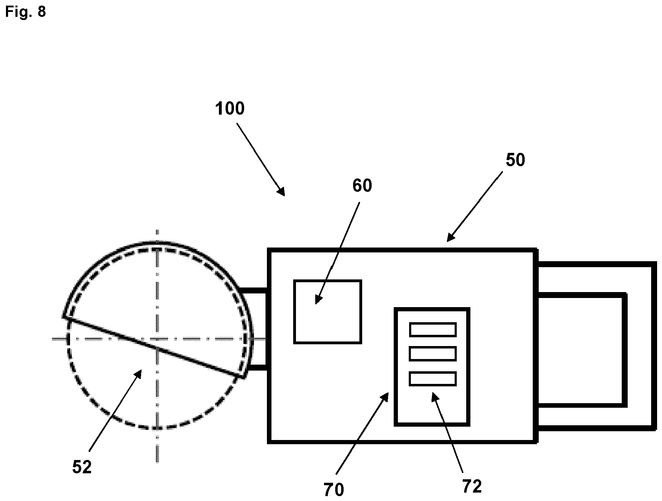

Figur 1 zeigt eine schematische Schnittzeichnung durch eine bevorzugte Ausgestaltung des Stators 10 des vorgeschlagenen Elektromotors 60 (siehe Fig. 8). Insbesondere zeigt Fig. 1 eine Schnittdarstellung in einer Ebene, deren Flächennormale der Rotationsachse des Elektromotors 60 entspricht. Die Rotationsachse des Elektromotors 60 ist vorzugsweise im Wesentlichen senkrecht auf der Figuren- bzw. Papierebene angeordnet, d.h. die Rotationsachse des Elektromotors 60 kommt aus der Zeichnungsebene heraus und dem Betrachter entgegen. Der in Fig. 1 dargestellte Stator 10 weist Nuten 28 (siehe Fig. 2) und Polzähne 16, die vorzugsweise nebeneinander angeordnet sind. Die Nuten 28 stellen Freiräume innerhalb des ansonsten vorzugsweise massiv ausgebildeten Stators 10 dar, wobei diese Freiräume dazu genutzt werden, die Polzähne 16 mit einem Metall-, Wickel- oder Leitermaterial zu umwickeln. Metalldrähte können Einzel-Leiter 22 darstellen und dazu genutzt werden, die Polzähne 16 des Stators 10 zu umwickeln, so dass Wicklungen 18 erhalten werden, die Spulen 20 zur Erzeugung von magnetischen Feldern bilden. Der Elektromotor 60 kann vorzugsweise in einer Werkzeugmaschine 50 verwendet werden, um ein Werkzeug 52 der Werkzeugmaschine 50 anzutreiben. Bei der Werkzeugmaschine 50 kann es sich um eine akkubetriebene Werkzeugmaschine 50 handeln, die vorzugsweise eine Energieversorgungsvorrichtung 70 aufweist.

Der Stator 10 weist in seinem Inneren einen Innenöffnung 12 auf, in der sich ein Rotor (nicht dargestellt) drehen kann. Die Innenöffnung 12 kann auch als Stator-Bohrung bezeichnet werden, wobei die Innenöffnung 12 einen Durchmesser 14 aufweist. Dieser Durchmesser 14 wird im Sinne der Erfindung als Stator-Innendurchmesser 14 bezeichnet. Der Stator-Innendurchmesser 14 entspricht vorzugsweise den Durchmesser eines Pferchkreises 36 (siehe Fig. 2), der in die Innenöffnung 12 des Stators 10 gelegt werden kann. Die Polzähne 16 können in Richtung der Innenöffnung 12 des Stators 10 ausgerichtet sein. Es können Schlitze 32 vorgesehen sein, die eine Verbindung zwischen der Innenöffnung 12 und den Nuten 28 bilden. Diese Schlitze 32 sind zum Einführen oder Durchführen der Metalldrähte bei der Herstellung der Wicklung 18 der Spulen 20 vorgesehen. Innerhalb der Nuten 28 sind in Fig. 1 die Querschnitte 30 von Einzel-Leitern 22 zu erkennen. Die Querschnitte können im Wesentlichen kreisförmig sein oder eine rechteckige oder quadratische Grundfläche aufweisen, wie in dem Beispiel in Fig. 1. Beispielsweise können die Querschnitte 30 der Leiter 22, die die Wicklungen 18 bilden, auch wabenförmig, sechseckig, dreieckig, elliptische oder fünfeckig ausgebildet sein, ohne darauf beschränkt zu sein. Die Auswahl geeigneter Querschnitte 30 der Leiter 22 führt vorzugsweise zu einem besonders hohen Füllgrad der Nuten 28 mit einem elektromagnetische wirksamen Metall-, Wickel- oder Leitermaterial, so dass ein besonders leistungsfähiger, effizient zu betreibender und gut zu kühlender Elektromotor mit der Erfindung bereitgestellt werden kann.

Der Stator 10 kann segmentiert, d.h. aus einer Anzahl von Einzelsegmenten 26 zusammengesetzt vorliegen. In dem in Fig. 1 dargestellten Ausführungsbeispiel der Erfindung weist der Stator 10 beispielsweise sechs Segmente 26 auf. Die Segmentierung des Stators 10 erleichtert den Wickelvorgang, mit dem die Wicklungen 18 hergestellt werden.

Figur 2 zeigt eine weitere schematische Schnittzeichnung durch eine bevorzugte Ausgestaltung des Stators 10 des vorgeschlagenen Elektromotors 60. Dargestellt ist die Innenöffnung 12 des Stators 10, sowie ein sog. Pferchkreis 36, der zur Bestimmung des Durchmessers 14 der Innenöffnung 12 des Stators 10 verwendet werden kann. Der in Fig. 2 dargestellte Stator 10 weist sechs Polzähne 16 auf, sowie sechs Wickelfenster 34 bzw. Nuten 28. Die Wickelfenster 34 bzw. Nuten 28 können über Schlitze 32 mit der Innenöffnung 12 des Stators 10 verbunden vorliegen. Darüber hinaus wird in Fig. 2 der sog. freie Wickelquerschnitt 24 dargestellt. Der freie Wickelquerschnitt 24 kann vorzugsweise derjenigen Fläche entsprechend, die pro Wicklung 18 bzw. pro Polzahn 16 für die Wicklung 18 bzw. für die Aufnahme des leitfähigen Wickelmaterials zur Bildung einer Spule 20 zur Verfügung steht. Wenn der Stator 10 beispielsweise sechs Polzähne 16 umfasst, weist der Stator 10 vorzugsweise auch sechs freie Wickelquerschnitte 24 auf, die im Sinne der Erfindung vorzugsweise auch als Nuten 28 bezeichnet werden. Die Nuten 28 bzw. freie Wickelquerschnitte 24 liegen vorzugsweise zwischen je zwei Polzähnen 16 angeordnet vor, wobei ca. die Hälfte eines freien Wickelquerschnitts 24 für die Wicklung 18 um den einen benachbarten Polzahn 16 zur Verfügung steht und die andere Hälfte für die Wicklung 18 um den anderen benachbarten Polzahn 16.

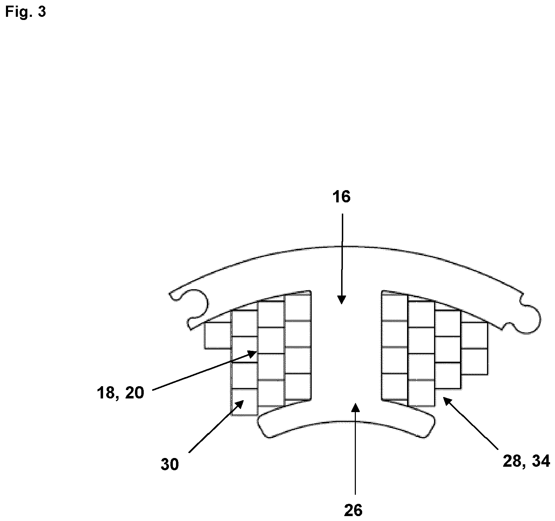

Figur 3 zeigt eine schematische Schnittzeichnung durch eine bevorzugte Ausgestaltung eines Einzelsegments 26 des Stators 10 des vorgeschlagenen Elektromotors 60. Das Einzelsegment 26 weist einen Polzahn 16 auf, wobei der Polzahn 16 von einer Wicklung 18 umgeben ist. Mit anderen Worten ist mindestens ein Leiter 22 um den Polzahn 16 herumgewickelt, um eine Spule 20 zur Erzeugung von magnetischen Feldern herzustellen. Das Material, aus dem die Wicklung 18 besteht, liegt vorzugsweise in den Nuten 28 des Stators 10 vor. Die Querschnitte 30 der Leiter 22, aus denen den Wicklung 18 in dem in Fig. 3 dargestellten Beispiels der Erfindung hergestellt ist, weisen eine rechteckige Grundfläche auf, so dass die Nut 28 bzw. das Wickelfenster 34 besonders vollflächig bzw. lückenlos parkettiert bzw. gefüllt werden kann.

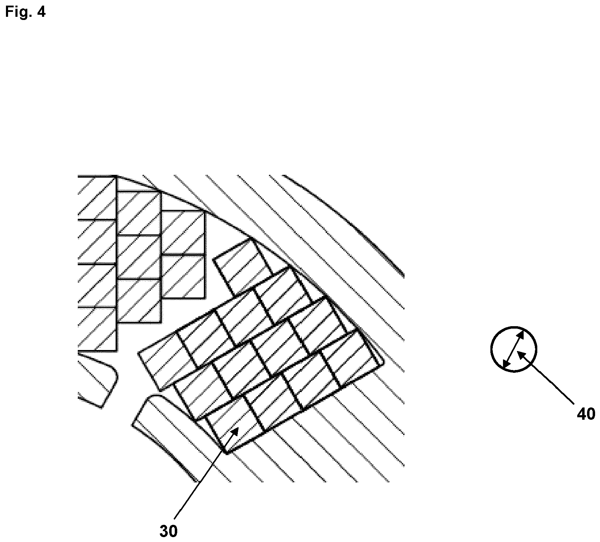

Figur 4 zeigt eine schematische Darstellung eines Windungsleitergesamtquerschnitt 30 und eines Referenz-Durchmessers 40 bzw. eines äquivalenten Windungsleiterdurchmessers 40. Der Windungsleitergesamtquerschnitt 30 kann über die in der Beschreibung genannten Formel in den äquivalenten Windungsleiterdurchmesser 40 umgerechnet werden.

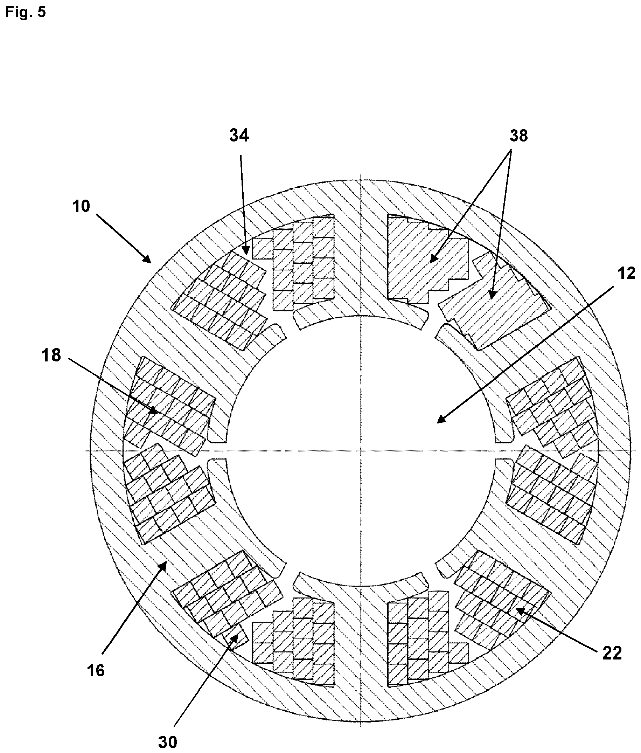

Fig. 5 zeigt eine schematische Darstellung des Stators 10 mit Summen 38 von Windungsleitergesamtquerschnitten 30. In den freien Wickelquerschnitten 24 (in Fig. 5 nicht dargestellt) können einzelne Leiter 22 verlaufen, um eine Wicklung 18 und eine Spule zu bilden. Die in Fig. 5 abgebildeten Leiter 22 weisen quadratische bzw. rechteckige Windungsleitergesamtquerschnitte 30 auf. Da der Leiter 22 mehrfach um den Polzahn 16 gewickelt ist, sind in der in Fig. 5 dargestellten Schnittdarstellung, deren Flächennormale einer Rotationsachse des Elektromotors 60 entspricht, mehrere kleine Quadrate abgebildet, die jeweils einen Windungsleitergesamtquerschnitt 30 symbolisieren sollen. Die Wickelfenster 34 werden jeweils von zwei Polzähnen 16 begrenzt, so dass in jedem Wickelfenster 34 die «halben» Wicklungen 18 von zwei Polzähnen 16 enthalten sind. Diese «halbe» Wicklung 18 wird in Fig. 5 als eine von zwei Teilflächen der Summe 38 der Windungsleitergesamtquerschnitte 30 dargestellt. Die Summe 38 der Windungsleitergesamtquerschnitte 30 stellt vorzugsweise die Summe der beiden in Fig. 5 abgebildeten und mit dem Bezugszeichen 38 versehenen Teilflächen dar. Die Summe 38 der Windungsleitergesamtquerschnitte 30 entspricht vorzugsweise der Fläche, die von dem Wickelmaterial, d.h. den Leitern 22, die die Wicklung 18 bilden, in der Schnittdarstellung eingenommen wird. Es ist im Sinne der Erfindung bevorzugt, dass der Begriff «Summe 38 der Windungsleitergesamtquerschnitte 30» auf ein Wickelfenster 34 bezogen wird, so dass die Summe der beiden mit Bezugszeichen 38 versehenen Teilflächen gebildet wird, um die «Summe 38 der Windungsleitergesamtquerschnitte 30» zu erhalten.

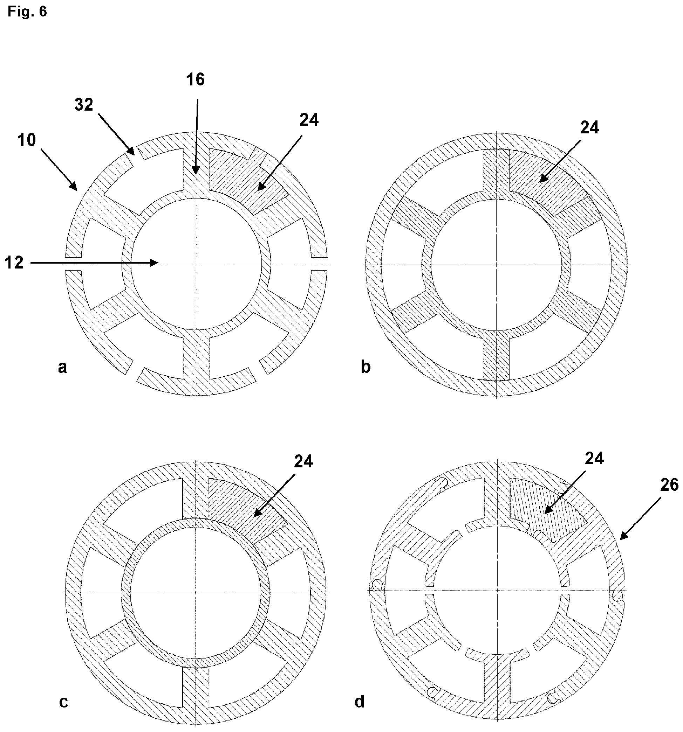

Fig. 6 zeigt eine schematische Darstellung verschiedener Statoren 10, die in den vorgeschlagenen Elektromotoren 60 verwendet werden können. Die in den Teilfiguren a-d abgebildeten Statoren 10 weisen jeweils Polzähne 16, sowie Innenöffnungen 12 auf. Eingezeichnet sind jeweils auch Schlitze 32 und die freien Wickelquerschnitte 24 der Statoren 10. Teilfigur a zeigt einen außengenuteten sechspoligen Stator 10, also einen Stator 10 mit sechs Polzähnen 16. Teilfigur b zeigt einen ebenfalls sechspoligen Stator 10, der zweiteilig und außen getrennt ausgebildet ist, während Teilfigur c zeigt einen innen getrennten sechspoligen Stator 10 zeigt, der auch zweiteilig ausgebildet ist. Teilfigur d zeigt einen segmentierten sechspoligen Stator 10, d.h. einen Stator 10, der sechs Polzähne 16 aufweist und der darüber hinaus aus einzelnen Segmenten 26 zusammengesetzt werden kann.

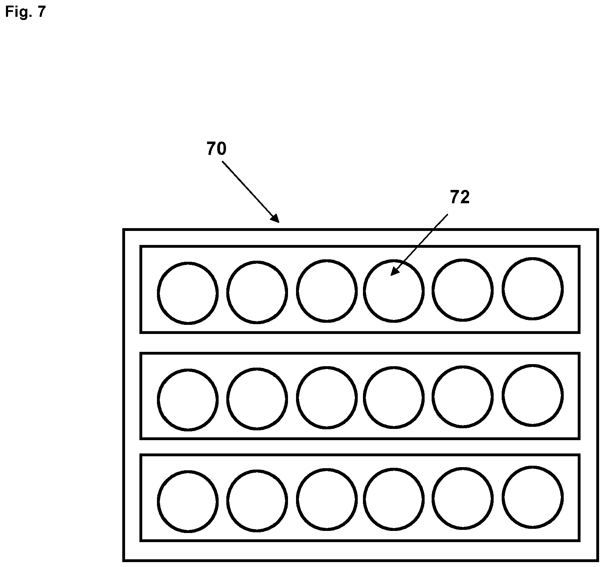

Figur 7 zeigt eine schematische Seitenansicht einer bevorzugten Ausgestaltung der Energieversorgungsvorrichtung 70. Die in Fig. 7 dargestellte Energieversorgungsvorrichtung 70 weist achtzehn Energiespeicherzellen 72 auf, wobei die achtzehn Zellen 72 in drei Strängen innerhalb der Energieversorgungsvorrichtung 70 angeordnet vorliegen. Die Zellen 72 werden insbesondere durch die Kreise symbolisiert, während die Stränge durch die länglichen Rechtecke symbolisiert werden, die die Kreise («Zellen 72») umgeben.

Fig. 8 zeigt eine schematische Ansicht einer Werkzeugmaschine 50 mit einer vorgeschlagenen Energieversorgungsvorrichtung 70. Bei der Werkzeugmaschine 50 kann es sich beispielsweise um einen Trennschleifer handeln, der als Werkzeug 52 eine Trennscheibe aufweist. Die Werkzeugmaschine 50 kann einen Griff aufweisen, der beispielsweise als hinterer Handgriff ausgebildet ist. Darüber hinaus kann die Werkzeugmaschine 50 in an sich bekannter Weise Bedienelemente, wie Schalter oder Knöpfe, aufweisen. Außerdem kann die Werkzeugmaschine 50 einen erfindungsgemäßen Elektromotor 60 aufweisen, der einen Verbraucher darstellen und von der Energieversorgungsvorrichtung 70 mit elektrischer Energie versorgt werden kann.

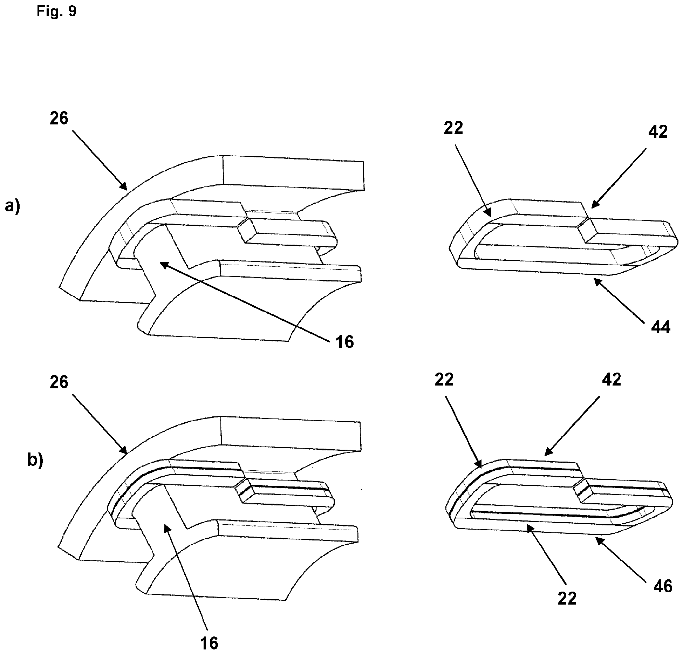

Figur 9 zeigt eine schematische Ansicht einer möglichen Ausgestaltung eines Segments 26 des Stators 10. Insbesondere soll mit den Teilfiguren a) und b) der Figur 9 der Unterschied zwischen einer Einfachwicklung (Bezugszeichen 44, Teilfigur a) und einer Mehrfachwicklung (Bezugszeichen 46, Teilfigur b) dargestellt werden. Einfachwicklungen 44 umfassen vorzugsweise einen Leiter 22, während Mehrfachwicklungen 46 mindestens zwei Leiter 22 umfassen. Der oder die Leiter 22 können um einen Polzahn 16 des Stators gewickelt werden, um eine Wicklung 18 zu erhalten. Es ist im Sinne der Erfindung bevorzugt, dass eine Windung 42 dadurch gebildet wird, dass der Draht, d.h. ein Leiter 22, einmal um einen Spulenkörper, d.h. den Polzahn 16, herumgeführt wird. Die Gesamtheit der Windungen 42 wird als Wicklung 18 bezeichnet. In Fig. 9 ist genau eine Windung 42 dargestellt, so dass hier noch nicht von einer Wicklung 18 gesprochen wird. Die in Teilfigur 9a dargestellte Windung 42 wird von zwei Leitern 22 gebildet. Es kann im Sinne der Erfindung bevorzugt sein, dass der vorgeschlagene Stator 10 Einfachwicklungen 44 und/oder Mehrfachwicklungen 46 umfasst.

### Bezugszeichenliste

- 10: Stator
- 12: Innenöffnung des Stators
- 14: Stator-Innendurchmesser
- 16: Polzahn des Stators
- 18: Wicklung
- 20: Spule
- 22: Einzel-Leiter
- 24: freier Wickelquerschnitt
- 26: Segment des Stators
- 28: Nut
- 30: Windungsleitergesamtquerschnitt
- 32: Schlitz
- 34: Wickelfenster
- 36: Pferchkreis
- 38: Summe der Windungsleitergesamtquerschnitte
- 40: Referenz-Durchmesser, äquivalenter Windungsleiterdurchmesser
- 42: Windung
- 44: Einfachwicklung
- 46: Mehrfachwicklung
- 50: Werkzeugmaschine
- 60: Elektromotor
- 62: Innenläufer-Motor
- 64: Außenläufer-Motor
- 70: Energieversorgungsvorrichtung
- 72: Energiespeicherzeller der Energieversorgungsvorrichtung
- 100: System

## Patentansprüche

1. Elektromotor (60), insbesondere für eine Werkzeugmaschine (50), wobei der Elektromotor (60) einen Stator (10) mit einer Innenöffnung (12) zur Aufnahme eines Rotors aufweist, wobei die Innenöffnung (12) einen Durchmesser (14) aufweist, der einem Stator-Innendurchmesser entspricht, wobei der Stator (10) eine Reihe von Polzähnen (16) aufweist, die jeweils von einer Wicklung (18) zur Bildung einer Spule (20) umwickelt sind, wobei die Wicklung (18) von einem Referenz-Durchmesser (40) charakterisiert wird,
**dadurch gekennzeichnet, dass**
ein Verhältnis des Referenz-Durchmessers (40) der Wicklung (18) zu dem Stator-Innendurchmesser (14) multipliziert mit einer Anzahl der Polzähne (16) größer als 0,3 ist.

2. Elektromotor (60) nach Anspruch 1
**dadurch gekennzeichnet, dass**
der Referenz-Durchmesser (40) dem Durchmesser eines Einzel-Leiters (22) entspricht, wenn der Einzel-Leiter (22) einen im Wesentlichen kreisförmigen Querschnitt aufweist und die Wicklung (18) genau einen Einzel-Leiter (22) umfasst.

3. Elektromotor (60), insbesondere für eine Werkzeugmaschine (50), wobei der Elektromotor (60) einen Stator (10) mit einer Innenöffnung (12) zur Aufnahme eines Rotors aufweist, wobei die Innenöffnung (12) einen Durchmesser (14) aufweist, der einem Stator-Innendurchmesser entspricht, wobei der Stator (10) eine Reihe von Polzähnen (16) aufweist, die jeweils von einer Wicklung (18) zur Bildung einer Spule (20) umwickelt sind,
**dadurch gekennzeichnet, dass**
ein Verhältnis gebildet wird aus einer Summe (38) der Windungsleitergesamtquerschnitte (30) und einem freien Wickelquerschnitt (24), wobei das Verhältnis mit einer Anzahl der Polzähne (16) multipliziert wird und das Produkt größer ist als 2,2.

4. Elektromotor (60) nach Anspruch 3
**dadurch gekennzeichnet, dass**
das Produkt größer als 2,5, bevorzugt größer als 2,8 ist.

5. Elektromotor (60) nach einem der vorhergehenden Ansprüche
**dadurch gekennzeichnet, dass**
eine Anzahl der Polzähne (16) in einem Bereich von zwei bis zwölf, bevorzugt vier bis zehn, besonders bevorzugt zwischen sechs und acht liegt.

6. Elektromotor (60) nach einem der vorhergehenden Ansprüche
**dadurch gekennzeichnet, dass**
der Elektromotor (60) segmentiert vorliegt, wobei eine Anzahl der Segmente (26) des Elektromotors (60) in einem Bereich von zwei bis zwölf, bevorzugt vier bis zehn, besonders bevorzugt zwischen sechs und acht liegt.

7. Werkzeugmaschine (50) mit einem Elektromotor (60) nach einem der vorhergehenden Ansprüche.

8. Werkzeugmaschine (50) nach Anspruch 7
**dadurch gekennzeichnet, dass**
die Werkzeugmaschine (50) lösbar mit einer Energieversorgungsvorrichtung (70) verbindbar ist, wobei die Energieversorgungsvorrichtung (70) dazu eingerichtet ist, die Werkzeugmaschine (50) mit elektrischer Energie zu versorgen.

9. System (100) umfassend eine Werkzeugmaschine (50) nach Anspruch 7 und eine Energieversorgungsvorrichtung (70)
**dadurch gekennzeichnet, dass**
die Energieversorgungsvorrichtung (70) mindestens eine Energiespeicherzelle (72) umfasst, wobei die mindestens eine Energiespeicherzelle (72) einen Innenwiderstand DCR_I von kleiner als 10 Milliohm aufweist.

10. System (100) nach Anspruch 9
**dadurch gekennzeichnet, dass**
die Energieversorgungsvorrichtung (70) mindestens eine Energiespeicherzelle (72) umfasst, wobei die mindestens Energiespeicherzelle (72) eine Oberfläche A und ein Volumen V aufweisen, wobei ein Verhältnis A/V von Oberfläche zu Volumen größer ist als das Sechsfache, bevorzugt das Achtfache und besonders bevorzugt das Zehnfache des Kehrwerts der dritten Wurzel des Volumens.

11. System (100) nach Anspruch 9 oder 10
**dadurch gekennzeichnet, dass**
die Energieversorgungsvorrichtung (70) mindestens eine Energiespeicherzelle (72) umfasst, wobei ein Verhältnis eines Widerstands der mindestens einen Energiespeicherzelle (72) zu einer Oberfläche A der mindestens einen Energiespeicherzelle (72) kleiner als 0,2 Milliohm/cm² ist, bevorzugt kleiner als 0,1 Milliohm/cm², am meisten bevorzugt kleiner als 0,05 Milliohm/cm².

12. System (100) nach einem der Ansprüche 9 bis 11
**dadurch gekennzeichnet, dass**
die Energieversorgungsvorrichtung (70) eine Kapazität von wenigstens 2,2 Ah, bevorzugt wenigstens 2,5 Ah aufweist.
